# EUROPEAN PATENT APPLICATION

(11) **EP 4 316 784 A1**
(43) Date of publication of application: **07.02.2024**
(21) Application number: 22188745.8
(22) Date of filing: 04.08.2022
(51) Int. Cl.: B29C 64/393, B22F 10/85, B33Y 50/02, B22F 12/90, B33Y 30/00, G06N 20/00

(54) **METHODS AND SYSTEMS FOR ASSISTING AN ADDITIVE MANUFACTURING PROCESS**

(71) Applicant: Siemens Aktiengesellschaft, 80333 München (DE)
(72) Inventor: FISCHER, Jan-Gregor, 85604 Zorneding (DE); RUDA, Gergely, 2081 Piliscsaba (HU)
(74) Representative: Siemens Patent Attorneys

(57) **Abstract**

A system for assisting an AM process of a workpiece (22) comprises a memory, a processor and an interface to receive a first data stream (30) and a second data stream (31) generated while the workpiece (22) is being manufactured. The first data stream (30) is provided by a device (23) controlling the AM process and is representative of a first form of a produced portion of the workpiece (22). The second data stream (31) is provided by a sensor system (24) monitoring the AM process and is representative of a second form of the produced portion of the workpiece (22). A data fusion component is configured to receive the first data stream (30) and the second data stream (31) and to generate a merged data stream (32) with a common time reference between the first and the second data stream. A geometrical classification component is configured to, based on the merged data stream, determine the second form of the produced portion of the workpiece. A quality inspection component is configured to compare the second form with the first form to assess the quality of the produced portion of the workpiece.

## Description

The subject-matter disclosed herein relates to systems and methods for assisting an additive manufacturing process.

With the widespread usage of additive manufacturing (3D printing) there is an ever-increasing need for quality assurance of printed workpieces. Additive manufacturing is all about adding material to shape a workpiece layer by layer.

If there is a qualitative printing problem in additive manufacturing due to a machine, process or material problem then the workpiece quality suffers and results in scrap production. And if the printing error is not detected or even hidden by adding layers over the problematic area then this hidden quality problem can easily lead to massive follow-up problems when the erroneous workpiece is used in products, especially when used in availability-critical or safety-critical products such as in the automotive, railway or aerospace domains.

Therefore, there is a need for in-process error detection and correction for additive manufacturing processes.

This need is satisfied by a system for (in-process) assisting an additive manufacturing process of a workpiece, for example by monitoring a quality of a produced portion of the workpiece, in other words, of a partially produced workpiece, wherein the system comprises
- a (volatile or non-volatile) memory that stores machine-executable components,
- a processor that is operatively coupled to the memory, and is configured to execute the machine-executable components, and
- an interface that is configured to receive a first data stream and a second data stream, wherein the first data and the second data stream are being generated while the workpiece is being manufactured by the additive manufacturing process, wherein

the first data stream comprises a first data, provided by a control device controlling the additive manufacturing process, representative of a first form of a produced portion of the workpiece, and
the second data stream comprises a second data, provided by a sensor system monitoring the additive manufacturing process, representative of a second form of the produced portion of the workpiece, wherein
   the machine-executable components comprise
   - a data fusion component configured to receive the first and the second data streams (as an input) and to generate/provide a merged data stream (as an output) by associating/linking the first data stream with the second data stream so that there is a common time reference between the first and the second data stream in the merged data stream,
   - a geometrical classification component configured to, based on the merged data stream, determine the second form of the produced portion of the workpiece, and
   - a quality inspection component configured to compare the second form with the (corresponding) first form to assess the quality of the produced portion of the workpiece.

The term "produced portion of the workpiece" stresses the fact that the workpiece undergoes the production process and the system disclosed herein is designed to assist the additive manufacturing process in real time, for example online. E.g., each produced portion can correspond to a pre-determined stage of the production process.

The data fusion component establishes a correspondence between the first and the second form at any time. This results, e.g., in a possibility of comparing results of executing particular lines of a part program executed by the control unit with frames (images) in the image datastream.

One or more components disclosed herein can be realized as a software, a software module, a software package and alike that comprise, e.g., human- or machine-readable code in a programming language that can be written in an imperative of declarative form. The components can be, e.g., compiled and/or run.

The quality assessment can, for example, result in a conclusion that the quality is (still) good, degrading or even improving. A degrading quality can be detected, when, for example, errors, e.g., printing errors occur during the additive manufacturing process of the workpiece.

In other words, assessing quality comprises detecting possible (incipient) errors that occur during the additive manufacturing process, i.e., during the process of (step-by-step) adding material, e.g., to a portion of the workpiece.

The errors can comprise geometrical errors, e.g., in thickness and/or width, e.g., of a printed circuit board (PCB), breaks, missing material in a printed layer (that might result in grooves and/or cavities in the workpiece, an incomplete powder layer, a missing coating etc.)

The in-process (real-time) quality assessment disclosed herein allows to detect incipient process errors and, e.g., makes in-process error correction possible, improving the quality of the final workpiece.

In an embodiment, the geometrical classification component is further configured to receive the merged data stream, and to detect the produced portion of the workpiece in the second data stream of the merged data stream.

In an embodiment, the additive manufacturing process comprises a plurality of printing steps. Each printing step can be defined or determined by a predefined or predetermined action performed by the additive manufacturing device or machine. This can be for example a certain loop (certain lines of a G code) in a part program (e.g., of an NC program) that causes a printing head of the machine to print a layer, e.g., a single material layer, or some predefined form.

The first form can be, therefore, composed of first geometric shapes associated with the printing steps of the additive manufacturing process.

The geometrical classification component can be further configured to determine at least one decomposition of the second form of the produced portion of the workpiece into second geometric shapes, and match and/or associate the second geometric shapes with the printing steps of the additive manufacturing process.

The second geometric shapes can be defined in a predetermined set of (e.g., basic printable) geometric (2D and/or 3D) shapes.

The basic shapes can be shapes that are not further decomposable into simpler shapes, e.g., a circle. Printable refers to the printability of the shapes by the additive manufacturing machine, e.g., that they can be matched and/or associated with some G code printing function.

In an embodiment, the quality inspection component can be configured to compare (in particular after each printing step) the second geometric shapes with the first geometric shapes to assess the quality of the produced portion of the workpiece.

In an embodiment the geometrical classification component comprises a machine learning algorithm, in particular a classification algorithm, which is utilized to detect the produced portion of the workpiece in the second data stream of the merged data stream. The classification algorithm can be a trained algorithm.

In an embodiment, the machine learning algorithm can be (previously) trained on a pre-defined training dataset representative of forms of produced portions of workpieces.

In an embodiment, the pre-defined training dataset is representative of decompositions of the forms of produced portions of workpieces into geometric shapes and the machine learning algorithm is utilized to determine the at least one decomposition of the second form of the produced portion of the workpiece into second geometric shapes.

In an embodiment, the classification algorithm can comprise a reasoner that is based on a descriptive logic. The reasoner can be configured to make an inference formally and mathematically by using a predetermined set (e.g., set of axioms). In particular the reasoner can be an untrained reasoner.

In an embodiment the predetermined set (for the reasoner) comprises semantic descriptions of geometric properties and relations between the geometric shapes in terms of the descriptive logic.

Semantic descriptions in the predetermined dataset can comprise properties, for example size, shape (e.g., number of corners, etc.), (possible) relation to each other (on top, seamlessly connected, centered, etc.) of the (basic) shapes.

Furthermore, the predetermined dataset can comprise description (or semantic definitions) of (equivalence) classes of shapes (e.g., a "sphere" is a shape without corners - semantic definitions of geometric shapes - basic shapes ontologies) .

In other words, semantic can be a part of the quality inspection component.

This facilitates semantic classification of, e.g., 2D and/or 3D geometries based on classification algorithms and algorithm configurations using equivalence class reasoning.

In an embodiment, the machine-executable components further comprise an action feedback component configured to provide a recommendation of at least one action to be performed on an additive manufacturing machine performing the additive manufacturing process of the workpiece.

In an embodiment, providing the recommendation, e.g., to an operator (of the additive manufacturing system) can comprise displaying the recommendation on a displaying device. This can provide a constant guidance for the operator of the additive manufacturing machine.

In an embodiment, the at least one action comprises stopping the additive manufacturing process and, in particular, performing (manual, e.g., by an operator or automated) correction actions after stopping the additive manufacturing process.

In an embodiment, the correction actions are associated with (known/ predetermined) material defects and (known/ predetermined) workpiece quality degradations and/or comprise a corrected machining program executable by the control device (GCode).

In other words, additionally, to a production stopping feature, the system can be used for corrective actions as well. This is especially interesting for long running and expensive printing processes. It is not only possible to stop or interrupt the additive manufacturing process, but the system can influence the upcoming printing steps to correct the found error. E.g., print more material to the next layer where the quality check identified a material deficit.

In an embodiment, the action feedback component is further configured to recommend at least one corrective action to the additive manufacturing process (without interrupting the manufacturing process) and to cause the control device to perform the at least one corrective action. This, in particular, allows for correcting incipient faults in the printing process.

In other words, corrective actions can be fully automated, e.g., for some well-known material defects and workpiece quality degradations. The procedures for such automated corrections can again be derived from the known or predefined semantical equivalence classes.

In an embodiment, the semantic equivalence classes can be defined based on input from a CAD/CAM system that can decompose the workpiece into its individual geometrical shapes.

E.g., in case of a predefined validation procedure of G code steps the automatic corrective actions could be implemented more easily. E.g., if a printed line misses some material in the middle of the line, then the system would only identify the position of the gap and initiate a corrective line printing action on that position, e.g., on the current or an upcoming 3D printing layer.

In another embodiment the defined / trained equivalence classes are shared with other users, who can reuse them in their 3D printing processes and thus can reduce efforts of their own definition / training phase resp. reduce the technical equipment / infrastructure costs needed for it. This could be the base for new business models.

In an embodiment, the system can, e.g., by means of a decision support component, provide decision support in form of a notification or an alarming of the operator and / or step-by-step manual correction instructions at system-selected safe points from the perspective of the 3D printing process or simply after completing the manufacturing process of a workpiece.

In an embodiment, the system can gain additional precision for geometric classification (in the inferencing process), when additional input from further sensors (e.g., external vibration sensors, ultrasound sensors, 3D laser scanner, etc.) is added.

In an embodiment, a time clock of the control device controlling the additive manufacturing process is the common time reference, for example, to know which G-code line corresponds to which frame in the data stream.

In an embodiment, the second data comprises an image data (is a data obtained by an imaging process; monitoring is an imaging process), in particular video stream data, laser-scanning data stream, ultrasound data stream (of a surface of the produced portion of the workpiece).

In an embodiment, the system can provide a report of produced workpieces, their qualities in production, the application of any in-process corrective actions, and - if so - the root cause of the decision of these corrective actions. This can be performed by means of a reporting component.

The above-formulated need is also satisfied by a computer-aided method of additive manufacturing of a workpiece, e.g., by monitoring a quality of a produced portion of the workpiece, the method comprising
- while the workpiece is being produced by an additive manufacturing process, receiving a first data stream and a second data stream, wherein

the first data stream comprises a first data, provided by a control device controlling the additive manufacturing process, representative of a first form of a produced portion of the workpiece, and
the second data stream comprises a second data, provided by a sensor system monitoring the additive manufacturing process, representative of a second form of the (same!) produced portion of the workpiece, wherein
   - generating a merged data stream by associating/linking the first data stream with the second data stream so that there is a common time reference between the first and the second data stream in the merged data stream,
   - based on the merged data stream, determining the second form of the produced portion of the workpiece, and
   - comparing the second form with the (corresponding) first form to assess the quality of the produced portion of the workpiece.

Furthermore, the need is satisfied by a computer program comprising instructions, which, when executed by a computing device, cause the computing device to carry out steps of the above-mentioned method.

Moreover, the need is satisfied by a computer-readable medium comprising such computer program.

The above and other objects and advantages of the invention will be apparent upon consideration of the following detailed description of certain aspects indicating only a few possible ways which can be practiced. The description is taken in conjunction with the accompanying drawings, in which like reference characters refer to like parts throughout, and in which:
- FIG 1: illustrates an additive manufacturing system,
- FIG 2: illustrates a flowchart of an additive manufacturing process,
- FIG 3: illustrates dataflow in FIG 2, and
- FIG 4: illustrates an inferencing phase the additive manufacturing process.

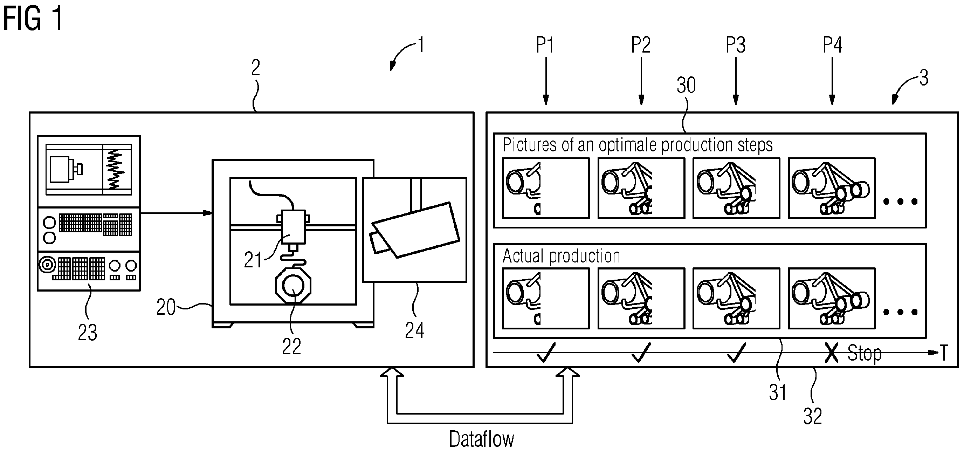

FIG 1 shows an additive manufacturing system 1. The system 1 comprises a 3D-printing machine 2 and a computing device 3 for assisting an additive manufacturing process, e.g., a process performed by the 3D-printing machine 2.

The 3D-printing machine 2 can comprise a machining (printing) area 20, where a printing head 21 is arranged to print workpieces.

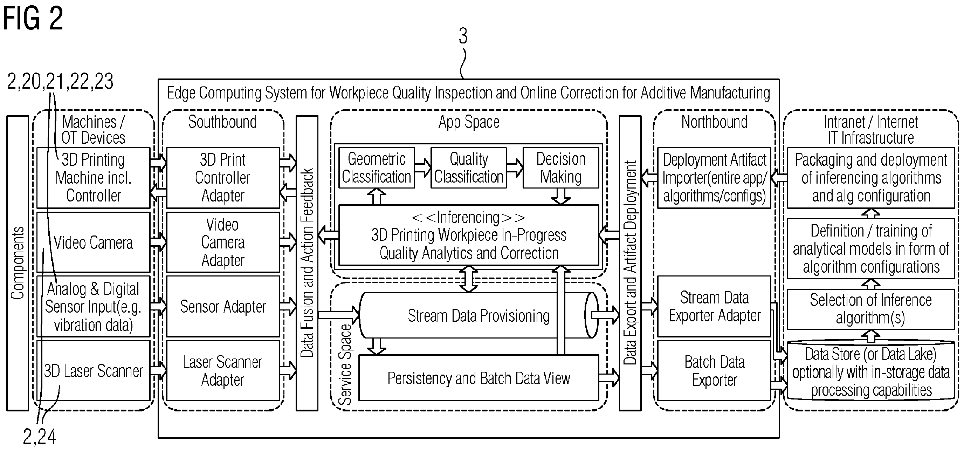

FIG 2 shows a process of printing a workpiece, where a portion of the workpiece 22 had been already printed.

The 3D-printing machine 2 further comprises a control unit 23, which can be designed as a CNC control unit. The control unit 23 controls the additive manufacturing process. In particular the control unit causes the printing head 21 to perform particular movements and printing actions, e.g., according to a part program that is executed on the control unit 23 during the additive manufacturing process. The part program can comprise a code, also called G-code.

For example, the code can comprise commands or group of commands that, when executed by the control unit 23, cause the 3D-printing machine 2 to print a particular geometric form or geometric shape.

During an additive manufacturing process, a workpiece 22 is created step by step. At each printing step P1, P2, P3, P4, ... the control unit 23 can execute one or more lines of the part program and cause the printing head 21 to print some geometric forms/shapes on the portion 22 of the workpiece.

In other words, there can be a correspondence between the part program code (G-code) and the printed geometric forms or shapes. E.g., the part program code can comprise a command like "print a cylinder with a radius R and with a height H".

To monitor the additive manufacturing process the 3D-printing machine 2 can comprise a monitoring system 24 that can comprise one or more cameras. The monitoring system 24 produces a stream, a sequence of image data 31 of a surface of the produced portion of the workpiece 22, e.g., a video stream data, and can be a part of a computer vision system.

The monitoring system 24 can be integrated into the 3D-printing machine 2 and, e.g., located in the printing area 20.

The monitoring system 24 can comprise further sensors for producing image data, in particular laser scanners to produce (a stream of) laser-scanning data, sound scanners to produce ultrasound data, etc.

The data, in particular in a form of a continuous data stream 30 from the control unit 23 - a first data - is submitted to the computing device 3.

The first data 30 can comprise a part program (G-code for example) that is executed by the control unit 23. Furthermore, the first data can comprise target data, which for example has been optimized in the process. Moreover, the first data may as well comprise actual data measured in the process from the perspective of the control unit 23, i.e., values from the running process. For example, curve-optimized axis setpoints and actual values interpreted from the measured currents. The setpoints can be optimized by the control unit 23.

In other words, the first data 30 is representative of a form of the produced portion of the workpiece 22 from the point of view of the control unit 23 - a first form of the produced portion of the workpiece 22.

The second data 31 is representative of form of the produced portion 22 of the workpiece from the point of view of the monitoring system 24.

With the first data 30 also the image data 31 from the monitoring system 24 - a second data - is submitted to the computing device 3, which is associated with the 3D-printing machine 2. The data between the computing device 3 and the 3D-printing machine 2 came in generally flow in both directions are, which is illustrated by a double arrow "Dataflow" in FGI 1.

The computing device 3 can be designed as an edge computing device, e.g., as an edge industrial computer or as some other circuitry, e.g., comprising one or more integrated circuits based on Field Programmable Gate Arrays, i.e., FPGA-based integrated circuits. It will be appreciated by the skilled person that the computing device 3 and the similar devices comprise a processor to execute machine-executable components.

The computing device 3 can interpret the received data 30, 31.

FIG 1 shows schematically sequences of images corresponding to printing steps P1, P2, P3, P4 ... that are carried out by the 3D-printing machine during the additive manufacturing process. T is the time axis. E.g., each printing step can correspond to printing a one single layer.

FIG 1 shows that based on the first data 30 for each point of time T the form of the produced portion 22 of the workpiece from the point of view of the control unit 23 can be generated and, in particular, visualized.

The computing device 3 comprises a data fusion component configured to receive the first data stream 30 and the second data stream 31 as an input and to generate a merged data stream 32 as an output. To produce a merged data stream 32 the data fusion component associates the first data stream 30 with the second data stream 31 so that there is a common time reference between the first data stream 30 and the second data stream 31 in the merged data stream.

In other words, the data fusion component links both data streams 30, 31 to each other, so that for any point of time of the additive manufacturing process, in particular, for any printing step P1, P2, P3, P4, ... the form of the portion 22 of the workpiece from the point of view of the control unit 23 - the first form of the portion of the workpiece 22 - is associated with and, therefore, comparable with the form of the portion of the workpiece 22 from the point of view of the monitoring system 24 - the second form of the portion 22 of the workpiece.

With that a correspondence between the first and the second form is established at any time T. With that the form of the produced portion 22 of the workpiece from the point of view of the control unit 23 in the form of the produced portion of the workpiece 22 from the point of view of the monitoring system 24 can be compared at/after each printing step P1, P2, P3, P4, ...

For example, the associating or linking can be performed as follows. G-Code (can be contained in the first data stream 30) has a logical time - G-code line number. G-code lines can be assigned to the clock of the control unit 23. The second data stream 31, e.g., a video stream has its natural time. The video camera can be designed as a Network Time Protocol client, as an NTP client. In this way, the timeclock of the control unit 23 in the first data stream 30 can be correlated/associated with the time and the second data stream 31.

In other words, the time clock of the control device 23 controlling the additive manufacturing process can be the common time reference. With that a correspondence between G code lines in the frames in the image data stream 31 is provided.

In an embodiment, there are more than one 3D-printing machines 2 to which the computing device 3 is associated. In that case the data streams coming from a particular 3D-printing machine can comprise metadata that can be used to label these data streams and to associate them with their correct 3D-printing machine.

Moreover, information about position and/or orientation of the workpiece and/or monitoring system, e.g., camera and/or printing head and/or printing area, e.g., of the 3D printer can be provided. It can be achieved, e.g., by getting information regarding relation between coordination systems of the workpiece and/or 3D printer (printing head) and/or the camera with the moving commands.

The merged data stream 33 is then provided to a geometrical classification component of the computing device 3. The geometrical classification component is configured to determine the second form of the produced portion 22 of the workpiece, based on the merged data stream.

The geometrical classification component and can therefore determine geometrical characteristics of the produced portion of the workpiece 22.

Furthermore, the computing device 3 comprises quality inspection component configured to compare the second form with the (corresponding) first form to assess the quality of the produced portion of the workpiece 22.

For that the quality inspection component can analyze data stream 32 and for example extract information from the first data stream about the first form, i.e., the form of the produced portion of the workpiece 22 from the point of view of the control unit 23, corresponding to the second form of the produced portion 22 of the workpiece that the geometrical classification component provided to the quality inspection component. The information about the first form can be for example a part of the part program in the first data stream 30 according to which a, for example, cylinder of the height H and of radius R is printed at a step Px. The second form of the produced portion of the workpiece 22, which is the result of that analysis of the image stream data by the geometrical classification component, can be that as Celinda a height H and of radius R has been printed at the step Px. In this case no error has happened in the additive manufacturing process can be continued.

In an embodiment, the computing device 3 can comprise an action feedback component configured to provide a recommendation of at least one action to be performed on 3D-printing machine 2 for the case, when the quality inspection component determines that there is a discrepancy between the first and the second form of the produced portion of the workpiece 22. This implies that there is a difference between the produced portion of the workpiece, as it interpreted/seen by the controller unit 23 - the first form, and the produced portion of the workpiece, is it seen by the monitoring unit 24 - the second form.

The actions that can be recommended, for example, to the operator of the 3D-printing machine 2 can comprise stopping the additive manufacturing process and, in particular, performing (manual, e.g., by an operator or automated) correction actions after stopping the additive manufacturing process.

In an embodiment, the correction actions are associated with (known/ predetermined) material defects and (known/ predetermined) workpiece quality degradations and/or comprise a corrected machining program executable by the control device (GCode).

In an embodiment, the action feedback component can be further configured to recommend at least one corrective action to the additive manufacturing process and to cause the control device to perform the at least one corrective action. This allows for fully automated correction of the additive manufacturing process without any human support.

In an embodiment, the system can, e.g., by means of the quality inspection component or by means of some another component, provide a set of technical statements for amending the engineering cycle of the printed workpiece in form of an automatically improved 3D printer program (GCode) to further reduce printing issues and the need of corrective actions during production (automated self-improving process of the engineering phase).

In particular, in this embodiment a model-based reasoning on the correlation between controller (GCode, print head movements, currents), sensor data (temperature, liquidity, pressure) and 3D geometric scene detection can be used to understand root cause, improvement options and impact / benefit of the options. The results can be presented in form of a report to the operator / GCode programmer.

In case of long running production or in case of production with expensive materials, an immediate stop of the machine saves costs when detecting printing problems early. An automated correction of the problem during the process saves waste production. In case of corrigible errors, the immediate and automated problem analysis and instruction of automated corrective actions during or at the end of the current printing step and before starting the next printing step mitigates qualitative workpiece problems before the next printing step continues to overlay the current printing layer and thus the area of immediate interest.

For that the action feedback component can generate a corrected part program and cause the control unit 23 to execute this corrected G code.

In an embodiment, the geometrical classification component can be configured to receive the merged data stream, and to detect the produced portion of the workpiece in the second data stream of the merged data stream.

As mentioned above the additive manufacturing process comprises a plurality of printing steps P1, P2, P3, P4, ..., wherein at each of the steps some geometrical forms or shapes are printed. In particular, at each printing step at least one geometric shape, in particular only one geometric shape is printed, e.g., according to a part G-code defining this printing step P1, P2, P3, P4, ...

The first form, therefore, can be composed of first geometric shapes associated with the printing steps of the additive manufacturing process, i.e., of the geometric shapes as "seen" from the point of view of the control unit 23 of the 3D-printing machine 2.

In this case, the geometrical classification component can be configured to determine at least one decomposition of the second form of the produced portion 22 of the workpiece into second geometric shapes, and to match/associate the second geometric shapes with the printing steps P1, P2, P3, P4, ... of the additive manufacturing process.

The second geometric shapes can be chosen from a predetermined set of geometric shapes, i.e., the geometric shapes that can be printed by a 3D-printing machine, meaning that there is a G code for printing each of the geometric shapes from the predetermined set of the geometric shapes.

The predetermined set of (printable) geometric shapes can comprise basic printable geometric shapes, i.e., the geometric shapes that cannot be decomposed any further.

The geometric shapes can be 2D or 3D geometric shapes.

The quality inspection component can be configured to compare (in particular after each printing step) the second geometric shapes with the first geometric shapes to assess the quality of the produced portion 22 of the workpiece.

In an ideal case, when the 3D-printing machine 2 prints what it should, there will be a one-to-one correspondence between the first and second geometric shapes.

If there is a deviation or discrepancy between the first geometric shapes in the second geometric shapes, a corrective action can be recommended and/or implemented, as described above.

In an embodiment, the geometrical classification component can comprise a machine learning algorithm, in particular a classification algorithm, which is utilized to detect the produced portion of the workpiece in the second data stream of the merged data stream.

The machine learning algorithm can be a trained algorithm. In particular, the machine learning algorithm can be trained on a pre-defined training dataset representative of forms of produced portions of workpieces.

In an embodiment, the pre-defined training dataset can be representative of decompositions of the forms of produced portions of workpieces into geometric shapes and the machine learning algorithm is utilized to determine the at least one decomposition of the second form of the produced portion of the workpiece into second geometric shapes.

The machine learning algorithm, e.g., trained machine learning algorithm, can be designed as an algorithm for classifying 3D printing situations and/or objects. Such machine learning algorithms can be trained for all the different steps of printing geometric shapes like a globe, cylinder, single dot point-line or, curve e.g.).

The training input data can be gained from equivalence class definition or from equivalence class training on reference printer data over the time or path domains (e.g. axis movements, energy consumption, speeds and accelerations of set points and actual values of the printing head over time or along a print path) and / or input video data labeled during a definition / training phase, where, e.g., each equivalence class describes a normalized geometric object such as a cylinder with variable properties like height, width, depth or circumference. The resulting equivalence classes can be used during inference (e.g., online classification) on the computing device either individually or in combination by automatically defining dynamic aggregations of such equivalence classes based on semantic combination of the base equivalence classes classifiers.

E.g., techniques known from 3D polygon combination in computer graphics that approximates a highly detailed final 3D geometry using a number of base polygons can be applied by the machine learning algorithms disclosed herein. The higher the number of polygons (or in our case the higher the number of equivalence classes) the higher the number of final aggregated equivalence classes and thus again the higher the specificity of a correctly matching classification of the actual image of a workpiece during or after processing.

In an embodiment, the quality inspection component can also comprise a machine learning algorithm, e.g., a trained machine learning algorithm, and particularly an algorithm for classifying a quality of the produced portion of the workpiece 22.

FIG 2 illustrates a flowchart of an additive manufacturing process that can be carried out by the system 1 of FIG 1 in more detail.

The computing device can be designed as an edge computing system 3 for workpiece quality inspection and online correction for additive manufacturing during the process of adding material to the workpiece 22.

The additive manufacturing process, e.g., 3D printing is carried out by the 3D printing machine 2 comprising a printing area 20, a printing head 21, a workpiece 22, a controller 23, and a monitoring system 24.

The controller 23 can receive data from analog and digital sensors, for example vibration sensors.

The monitoring system 24 can comprise one or more video cameras, 3D laser scanners etc.

It will be appreciated by the skilled person that the edge computing system 3 can receive and process the data from more than one 3D printing machines carrying out different additive manufacturing processes.

In other words, the input data for the edge computing system 3 may come from different machines and/or operational technology (OT) devices on the shopfloor.

The controller 23 can provide data on the current position in the numerical control program of the machine 2, printing axis information, feed rate and acceleration values according to the 3D printer's toolpath along the material-additive process.

The video camera provides image data comprising plurality of images showing the field of action as basis for the quality classification process on the edge computing system 3. At least one video frame is available for each printed layer to allow proper classification and thus proper understanding of the printing situation.

Optionally, the data from analog and digital sensors, e.g., vibration sensors, can be provided. E.g., by relating analog vibration data or digital information about starting / stopping event or opening / closing the machine door. This input data can be merged on the edge computing system 3 by the data fusion component.

Optionally, the monitoring system 24 can comprise one or more 3D laser scanner(s) that provide further image data. This might improve accuracy of the classification.

In an embodiment, the 3D laser scanner image data is provided instead of the video camera data.

The input data from the laser scanner - a so-called 3D point cloud over time - can be merged on the edge computing system by the data fusion component.

To receive the data the edge computing system may comprise one or more interfaces. The "Southbound" side of the Edge computing system 3 represents the logical view on the physical computer network that is facing to the machine 2. This part of the edge computing system 3 comprises logical representations of the real hardware and devices on the shop floor, which are abstracted by so-called "Adapters" to integrate these devices into the system architecture at runtime. Each Adapter can work as digital surrogate/agent of a device to connect to it via a computer network, integrate data (e.g., video camera data) and provide feedback to the 3D printing controller 23 (e.g., provide change request to a machining operation or change a 3D print program during material processing or apply a printing head 21 feedrate override request).

The Southbound side can comprise the Adapters and integrate them with data fusion component.

It will be appreciated by the skilled person that the data fusion component and the action feedback component can be designed as one module (see FIG 2).

The data fusion component can be configured to integrate and synchronize the different data sources in a time-relational and, e.g., a semantic, manner. This can allow for a semantic classification of the scene of operation using 3D-geometry equivalence classes. E.g., the deterministic real-time cycle counter, the position data of the printer head 21 (coming from the 3D printer controller 23) and /or the line position information of the running NC program can be used as reference data to synchronize all the other data to.

The action feedback component allows to send an action back to the 3D printer 2 that shall have a correctional/positive effect on the printing process. Actions can be: setting a shared system or user variable (that can be used by the NC programmer to react on feedback from the edge computing system 3), providing a sub-NC-program for calling by the main program, e.g., via an EXTCALL function, providing an entire NC program to be started next, providing a machine action such as a STOP instruction to halt the printing process, a MOVEMENT instruction to move the printer head 21 to a specific location (optionally along a given safety route), a PRINTERHEAD instruction to stop or influence the material addition flow or a FEEDRATE instruction to override the federate of the printer head 21 movement or a combination or a sequence of multiple of such actions.

Furthermore, the edge computing system 3 con comprise a service space. In the service space there is one or more services for provisioning and storing the input data that is describing the actual 3D printing process in motion.

The service space can comprise a Stream Data Provisioning component that, e.g., provides a low-latency, near-realtime (in another embodiment: deterministic realtime) data for consumption by the components in an App Space of the edge computing system 3 (see furhter below). This data 30, 31 provides an always up-to-date view on the machining process carried out by the 3D printer 2 with very low delays (e.g., below 100ms) in the information flows. These low delays improve reliability of the edge computing system 3 as they are calculated in the closed-loop control that includes input data transfer, situation classification, decision making and back-propagation of resulting actions to the machine to improve the 3D printing process.

Optionally, the service space can comprise Persistency and Batch Data View that can store incoming data persistently over a pre-defined amount of time (e.g., 3 months) and provide a batch-data-based information source for historic data. This component can be used by the components on the App Space to benchmark current data with historic information, for deriving inference results describing the current situation based on past situations and their relations and to explain the root cause of process and workpiece degradation over time based on situational state changes over a range of time.

The edge computing device comprises the App Space or application space that runs the logic of the situation classification for workpiece quality assessment and decision making for in-process workpiece quality corrections.

The App Space comprises 3D Printing Workpiece In-Process Quality Analytics and Correction function that manages and keeps track of the main logics control flow by accepting stream-based input data via the Stream Data Provisioning component and/or by querying the "Persistency and Batch Data View" whenever time-window based historic data is needed for situation understanding. It interacts with the other components in the App Space to assess workpiece quality in an iterative-incremental situation understanding process by running analytical and/or machine learning algorithms with analytical algorithms configurations (also known as analytical models) on the data from the stream data provisioning and / or the persistency and batch data view. The algorithms and the algorithm configurations are coming from a "Northbound" (see below) once when / after the edge computing system 3 is set up for the first time and can be updated to newer version afterwards.

The 3D Printing Workpiece In-Process Quality Analytics and Correction function is implemented by a geometric classification component, a quality inspection and/or classification component and a decision-making component. Optionally, the decision-making component can be integrated into the quality inspection component.

The geometric classification can be configured to run at least one algorithm to classify 3D geometries in the input data (e.g., camera images 31) with at least one algorithm configuration on the fused input data 32 to identify 3D geometries in the data 31. This input data 30, 31 can comprise one or multiple of the following data types: GCode data of the NC program, machine data (e.g. axes movements with position set points and actual values, velocities, accelerations, currents, printer head properties such as temperature, material flow, pressures, etc.), video camera images 31, optional 3D laser scanner, optional analog and digital inputs from further sensors such as external vibration, ultra sound, audio and other sensors.

The quality classification is configured to run at least one algorithm to classify workpiece quality in the input data 32 (e.g., camera images) with at least one algorithm configuration on the identified, by the geometric classification component, 3D geometries and the fused input data to identify current (and future) workpiece quality in the data.

The decision making can be configured to carry out at least one algorithm with at least one algorithm configuration on the identified current and future workpiece quality to derive whether and which feedback action for the 3D printer 2 is needed to influence the current printing process so to abort printing or improve printing quality by changing 3D printing parameters along a sequence of upcoming printing steps influencing the remaining printing layers of a workpiece with currently sub-optimal workpiece quality.

The "Northbound" side of the Edge computing system 3 represents the logical view on the physical computer network that faces the backend systems that allow storing and analyzing (huge) amounts of data (so-called big-data management and analytics systems). This part may contain logical representations of common endpoints for data exporting and deployment artifact importing tasks.

In an embodiment, the edge computing system 3 comprises a deployment artifact importer component (entire app / algorithms / configs) that is configured to import and/or to install entire components, e.g., to replace old versions of components in the App Space, algorithms and / or algorithm configurations to improve the performance of the edge computing system 3 according to a specific 3D printer, available data sources and target workpiece depending on the scope and complexity of replacement.

In an embodiment, the edge computing system 3 comprises stream data exporter adapter component that is configured to forward data coming from the Stream Data Provisioning component to an external data store that is capable to hold big amounts of data.

Optionally, the edge computing system 3 can comprise a batch data exporter component that is configured to export data from the Persistency and Batch Data View component to an external data store that is capable to hold big amounts of data.

The edge computing system 3 can be connected to an intranet / internet Information Technology (IT) infrastructure, e.g., IT systems in an IT backend infrastructure on customer premises or in the Cloud.

The IT infrastructure can comprise a data store (or a data lake), where an input data, e.g., the merged data 32 from one or multiple edge systems can be integrated, stored and aggregated.

The IT infrastructure can comprise a selection of inference algorithm(s), where a proper inference algorithm for classification and decision making on the edge computing system 3, e.g., based on the 3D printer type and / or model, available camera and sensor data and workpiece type can be selected.

Inference algorithms can comprise a selection or combination of description logics reasoning, temporal logic reasoning, complex event processing, mathematical optimization, statistics, rule-based reasoning, automata theory, Neural Network and / or simulation.

The IT infrastructure can comprise a definition / training of analytical models function that allows to define and/or train analytical models, e.g., in form of algorithm configurations. In particular it can allow to manually / semi-automatically or automatically define or train analytical models (i.e., configurations for analytical algorithms) based on selected inference algorithms, the 3D printer type and / or model, available camera and sensor data and workpiece type. The resulting analytical configurations can be deployed to the Edge computing system 3 together with the analytical algorithms (in case not deployed previously in the required version) into the App Space for classifying geometry, workpiece quality and making decision on whether to stop the 3D printer and how to repair / improve workpiece quality.

Further a packaging and deployment of, e.g., reasoner-based or semantic-based inferencing classification algorithms and algorithm configuration component can be provided that packages the deployment artifacts into an app for the App Space or into a combination of algorithm and corresponding algorithm configuration or into individual packets of algorithm and algorithm configurations depending on which artifacts were changed in the backend and thus need to be updated on the Edge computing system 3, e.g., by incrementally updating individual or combined deployment artifacts). The deployment can be done by providing the packaged artifacts to the "Deployment Artifact Importer" component on the Edge computing system 3, which can then install / update inferencing components in the App Space.

In another embodiment all components shown in the App Space in FIG 2 can be combined into a single logical module that is executed on the Edge computing system 3.

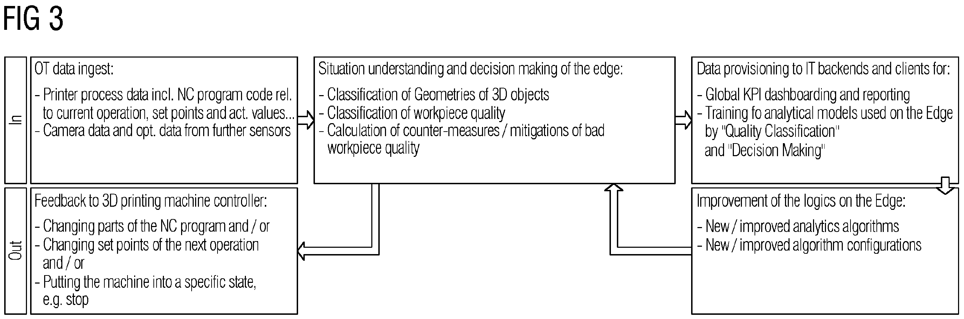

FIG 3 illustrates data flow in terms of input and output data with regard to the edge device system 3 of FIG 2.

As an input from the southbound, the edge device system 3 can get ingested with a 3D-printing machine 2 process data from the controller 23 including NC program code relating to current operation, set points and actual values and the data from further sensors - the first datastream 30 - and with the image data, for example, video stream data from one or more digital cameras - the second datastream 31.

As an input from the northbound, the edge device system 3 can get ingested with one or more improvements for its logics, for example, with new or improved analytics algorithms and/or or improved algorithm configurations.

On the southbound, the edge device system 3 can output feedback to the 3D printing machine controller 23. The feedback can comprise a suggestion to change one or more parts of the NC program and/or a recommendation to change one or more setpoints of the next operation, for example, of the next printing step and/or put the machine into a specific/predefined state, for example to stop it.

On the northbound, the edge device system 3 can output data to IT backends and clients, for example, for global KPI dash-boarding and reporting and/or training of lyrical models used on the edge device system 3, e.g., by quality classification and/or decision-making components.

The situation understanding and decision-making on the edge device system 3 comprises functions of classification of geometries of 3D objects and/or classification of workpiece quality and/or calculation of countermeasures/mitigations of bad workpiece quality.

In another words, the system and method disclosed herein allows identification of incorrect printed steps by analyzing the 3D print machine controller data and the captured camera images during actual processing. In another embodiment, further data is used during this analysis process to improve the quality of this analytical inspection process even more: further analog and digital sensor inputs as well as 3D laser scanner data can be fused by logical combination and temporal correlation to always the same 3D printer toolpath position and NC program line of the current printing step.

Furthermore, a performance optimization by reusability, and training process scalability of the geometric base equivalence classes (trained once and reused many times / training steps can be parallelized) is achieved.

Moreover, the presented approach can allow to explain the root cause of potential printing quality issues or errors by tracing back the overall image classification to the individual decision making process of mapping a 3D printed geometry to an aggregated set of individual geometries or - during the printing process when the workpiece is being created step by step using basic geometries - the individual geometries in a sequential order mapped to the corresponding 3D-printing steps. These geometries can be mapped to equivalence classes that can be defined in the definition phase (respectively trained in the training phase) and are now used as individual or combined classifiers (based on reasoners) during the actual 3D printing process in the so-called inferencing phase.

Instead of doing a one-shot classification of camera snapshots the subject-matter disclosed herein can classify each individual additive manufacturing step by mapping it to a probability measure of matching a pre-defined equivalence class with variability in some of the classes' geometric properties expressed by semantic properties such as height, depths, or simply a generic scaling factor.

The equivalence classes can be defined semantically in the formalism of description logics. This allows automated consistency checking of the classification input for the inferencing phase by transforming the defined / trained assertions based on generic geometric terminology into a mathematical class satisfiability problem. Similarly, the definition / training phase and the classification input can be optimized by automatically minimizing the number of equivalence classes according to the description logics-inherent class equivalence / class inheritance axioms and again applying automatic class satisfiability checks. This allows to identify and eliminate duplicate geometric equivalence classes, thus reducing the number of equivalence classes in the classifier base, which speeds up the processing during the inference phase.

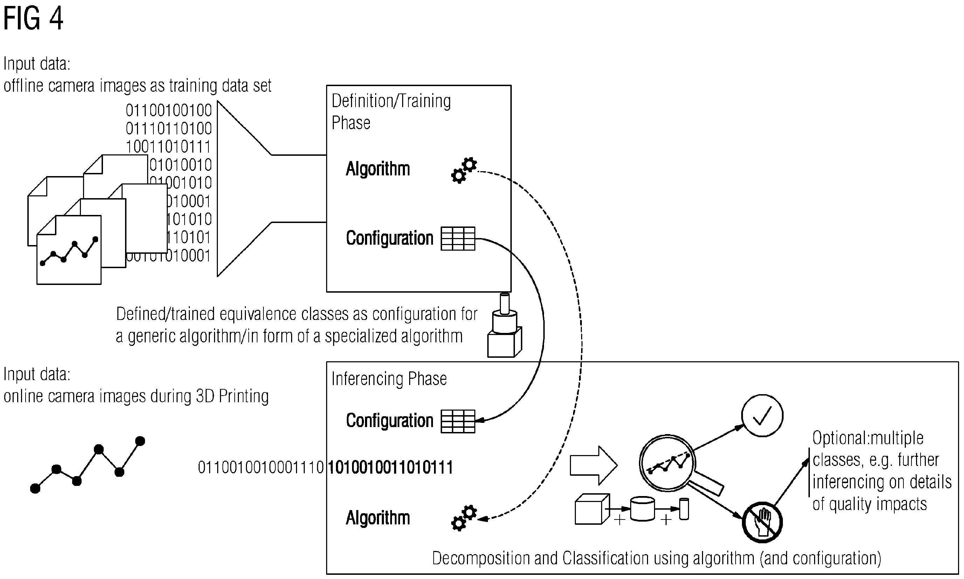

FIG 4 illustrates an inferencing phase in more detail. In a definition and training phase equivalence classes of geometric shapes/forms are defined ("Configuration" in FIG 4) and an (untrained) algorithm ("Algorithm" in FIG 4) is trained, e.g., offline, with an image data representative of portions of workpieces, i.e., partially produced workpieces. It will be appreciated by the skilled person, that the training phase must not necessarily include the phase of the definition of the geometrical equivalence classes. E.g., the equivalence classes can be pre-defined equivalence classes that are stored in a database, e.g., in a knowledge base, for example in a cloud or on some server in the shopfloor.

The machine learning algorithm ("Algorithm" in FIG 4) can be an untrained or pre-trained algorithm. As disclosed herein, the machine learning algorithm can comprise a reasoner. In particular the machine learning algorithm can comprise a classification algorithm, which can be based on the reasoner.

The reasoner uses descriptive logic and a predetermined dataset comprising semantic description of the equivalent classes of geometrical forms and shapes.

In other words, the machine learning algorithm can be based on the reasoner and can be trained on the image data representative or workpieces in production. It is trained to recognize in the images: the workpiece in production and the (printable) geometrical shapes and/or forms (cubes, cylinders, etc.), which are defined in the equivalence classes and into which the workpiece can be decomposed.

During the inferencing phase (see FIG 4), the trained machine learning algorithm is applied to the image data, e.g., in-process 3D printing image data, in particular to the second data stream 31 of the merged data stream 32 to perform decomposition and classification of the detected form of the manufactured portion 22 of the workpiece.

Optionally, if the algorithm does not produce a clear result, further inferencing can be performed, while, e.g., the production process is interrupted (sign with a "crossed hand" in FIG 4) .

The 3D printer controller 23 being an information source, as it runs/executes the numerical control program that is moving the printer head. The program is typically provided in form of a set of so-called "G code"/program code instructions of printing lines with parameters: the starting and end position and the thickness, e.g., a validation algorithm of the printed line can now use those parameters and with that information the algorithm can calibrate the camera's observations and / or improve the classification of such printed lines according to the captured camera images (comparing the camera image of the printed line to the corresponding G code information and checking if this was printed correctly). So, the G code input from the numerical control unit (controller) 23 of the 3D printer 2 is used to get the processing instructions in order to align this input with the classification procedure when doing inference on the camera images. This results in higher precision and a good tradeoff for mass production of the same or very similar workpieces compared to only using a camera input.

In case of a detected printing error the algorithm can stop the printing-process and save material and production time.

The subject-matter disclosed herein can allow to explain why an error occurred by tracing back from a classification match of an aggregation of equivalence classes over the sequence of classes making up the aggregation with their individual geometric properties back to the first class (or first set of classes) that was matched to an incipient printing fault.

This approach allows to find incipient faults and also raises classification precision as classification can be done multiple times (or even continuously) during workpiece processing.

In a nutshell the subject-matter disclosed herein combines several technologies such as edge computing, equivalence class definition, machine learning (neural networks), description logics, sensor data fusion and semantic contextualization of data with a numerically controlled additive manufacturing process to form a allow for a higher precision in and a better performance of automated workpiece quality control and decision support for automated self-healing / improving the workpiece quality during 3D printing processes.

The step-by-step process comprises
- Motion controller data acquisition with GCode integration
- Video camera stream-based data acquisition with image segmentation and object detection
- Temporal and causal data fusion of controller, camera and sensor inputs for contextualization
- Situation understanding by semantic classification of the scene of operation using 3D-geometry equivalence classes
- In-process decision automation with near real-time or real-time feedback to the 3D printing controller
- Automatic, in-process repair of printed workpieces
- Transparency and decision support for the improvement of the engineering process using model-based correlation between controller, external sensor and video data.

The subject-matter disclosed herein can stop the production and / or automatically / semi-automatically apply corrective actions at the first error during a 3D printing process and thus save cost (not only the production cost of the faulty product but also the cost of recall) and additionally increase production planning accuracy, product quality, production reliability and reduce risk of product failure when being used in assembled compound products such as airplanes, motor cars, trains, etc.

With corrective actions - early when detecting incipient workpiece quality degradations or after detecting actual degradation still during the process -, the system can immediately take counter actions, repair the workpiece to full or partial quality and thus safe immense costs in series production or small size, high value workpiece production and thus decrease the amount of waste production.

The system and method disclosed herein also provide automated feedback to improve PLM processes with decision support for amending the GCode and thus improving 3D printing quality and reducing the need of future in-process countermeasures.

The above-described embodiments of the present disclosure are presented for purposes of illustration and not of limitation. In particular, the embodiments described with regard to figures are only few examples of the embodiments described in the introductory part. Technical features that are described with regard to systems can be applied to augment methods disclosed herein and *vice versa.*

## Claims

1. System for assisting an additive manufacturing process of a workpiece (22), wherein the system comprises
- a memory that stores machine-executable components,
- a processor that is operatively coupled to the memory, and is configured to execute the machine-executable components, and
- an interface that is configured to receive a first data stream (30) and a second data stream (31), wherein the first data stream (30) and the second data stream (31) are being generated while the workpiece (22) is being manufactured by the additive manufacturing process, wherein
the first data stream (30) comprises a first data, provided by a control device (23) controlling the additive manufacturing process, representative of a first form of a produced portion of the workpiece (22), and
the second data stream (31) comprises a second data, provided by a sensor system (24) monitoring the additive manufacturing process, representative of a second form of the produced portion of the workpiece (22), wherein
the machine-executable components comprise
- a data fusion component configured to receive the first data stream (30) and the second data stream (31) and to generate a merged data stream (32) by associating the first data stream with the second data stream so that there is a common time reference between the first and the second data stream in the merged data stream,
- a geometrical classification component configured to, based on the merged data stream, determine the second form of the produced portion of the workpiece, and
- a quality inspection component configured to compare the second form with the first form to assess the quality of the produced portion of the workpiece.

2. System of Claim 1, wherein the geometrical classification component configured to
- receive the merged data stream (32), and
- detect the produced portion (22) of the workpiece in the second data stream of the merged data stream.

3. System of Claim 1 or 2, wherein the additive manufacturing process comprises a plurality of printing steps (P1, P2, P3, P4), wherein
the first form is composed of first geometric shapes associated with the printing steps (P1, P2, P3, P4) of the additive manufacturing process, wherein
the geometrical classification component configured to
- determine at least one decomposition of the second form of the produced portion of the workpiece into second geometric shapes, and
- match the second geometric shapes with the printing steps of the additive manufacturing process, and
the quality inspection component configured to compare the second geometric shapes with the first geometric shapes to assess the quality of the produced portion of the workpiece.

4. System of any one of Claims 1 to 3, wherein the geometrical classification component comprises a machine learning algorithm, in particular a classification algorithm, which comprises a reasoner that is based on a descriptive logic and uses a predetermined set comprising semantic descriptions of geometric properties and relations between the geometric forms and/or shapes in terms of the descriptive logic.

5. System of Claim 4, wherein the machine learning algorithm is trained on a pre-defined training dataset representative of forms of produced portions of workpieces.

6. System of Claim 5 in combination with Claim 3, wherein the pre-defined training dataset is representative of decompositions of the forms of produced portions of workpieces into geometric shapes and the machine learning algorithm is utilized to determine the at least one decomposition of the second form of the produced portion of the workpiece into second geometric shapes.

7. System of any one of Claims 1 to 6, wherein the machine-executable components further comprise an action feedback component configured to provide a recommendation of at least one action to be performed on an additive manufacturing machine performing the additive manufacturing process of the workpiece.

8. System of Claim 7, wherein the at least one action comprises stopping the additive manufacturing process.

9. System of Claim 8, wherein the at least one action comprises performing correction actions after stopping the additive manufacturing process, wherein, in particular, the correction actions are associated with material defects and workpiece quality degradations and/or comprise a corrected machining program executable by the control device (23).

10. System of any one of Claims 7 to 9, wherein the action feedback component is further configured to recommend at least one corrective action to the additive manufacturing process and to cause the control device (23) to perform the at least one corrective action.

11. System of any one of Claims 1 to 10, wherein a time clock of the control device controlling the additive manufacturing process is the common time reference.

12. System of any one of Claims 1 to 11, wherein the second data (31) comprises an image data, in particular video data stream, laser-scanning data stream, ultrasound data stream.

13. Computer-aided method of additive manufacturing of a workpiece comprising
- while the workpiece (22) is being produced by an additive manufacturing process, receiving a first data stream (30) and a second data stream (31), wherein
the first data stream (30) comprises a first data, provided by a control device (23) controlling the additive manufacturing process, representative of a first form of a produced portion (22) of the workpiece, and
the second data stream (31) comprises a second data, provided by a sensor system (24) monitoring the additive manufacturing process, representative of a second form of the produced portion (22) of the workpiece, wherein
- generating a merged data stream (32) by associating the first data stream (30) with the second data stream (31) so that there is a common time reference between the first and the second data stream in the merged data stream (32),
- based on the merged data stream (32), determining the second form of the produced portion (22) of the workpiece, and
- comparing the second form with the first form to assess the quality of the produced portion of the workpiece.

14. Computer program comprising instructions, which, when executed by a computing device, cause the computing device to carry out steps of a method of Claim 13.

15. Computer-readable medium comprising a computer program of Claim 14.
